# EUROPEAN PATENT SPECIFICATION

(11) **EP 4 532 382 B1**
(45) Date of publication and mention of the grant of the patent: **11.11.2026**
(21) Application number: 23727123.4
(22) Date of filing: 23.05.2023
(51) Int. Cl.: B65H 1/00, B65B 11/04, B65B 25/14, F16H 37/16

(54) **ELECTRICALLY DRIVEN TURNTABLE**
ELEKTRISCH ANGETRIEBENER DREHTISCH
PLATEAU TOURNANT À ENTRAÎNEMENT ÉLECTRIQUE

(30) Priority: 01.06.2022 US 202263347658 P; 19.09.2022 SE 2230295
(43) Date of publication of application: 09.04.2025
(73) Proprietor: Valmet AB, 851 94 Sundsvall (SE)
(72) Inventor: ENGMAN, Dennis, 852 33 Sundsvall (SE); CASTENBORG, Gustav, 907 34 Umeå (SE); FORSBERG, Mattias, 861 52 Söråker (SE); NORDHÄLLING, Stefan, 865 51 Ankarsvik (SE)
(74) Representative: Brann AB
(86) International application number: PCT/SE2023/050505
(87) International publication number: WO 2023/234828

(56) References cited:
- JP-A- 2005 323 539
- JP-A- 2008 230 675

## Description

### Technical field

The present invention relates generally to a turntable for lifting and rotating a paper bale, wherein the turntable comprises a turning unit, an electrical motor and a gear arrangement configured to convert torque from the electrical motor to a vertical movement and a rotating movement of the turning unit. The present disclosure further relates to a paper bale wrapper folding machine comprising said turntable.

### Background art

In paper manufacturing, once a paper bale is manufactured, the paper bale is usually wrapped in some kind of protecting wrapping such as pulp sheets or roll paper. A common alternative is to utilize a wrapper folding machine that folds paper packaging around the bales. Such a solution is disclosed in, for instance, US 3327452 A. JP2008230675 discloses a seaweed bundle turning apparatus comprising a receiving plate for receiving a seaweed bundle which has dropped from a convergence device, and for turning the seaweed bundle 90°.

Traditionally, the rotating and lifting (vertical) movements of a turntable utilised in a paper bale wrapper folding machine have been driven by hydraulics. In a conventional hydraulically driven turntable at least three pneumatic cylinders are needed to perform the lifting and rotation of the turntable, one cylinder for the lifting movement and two cylinders for the rotating movement.

However, in recent years, there has been a growing trend towards electrification of industrial machineries as electrically driven machines usually require less maintenance and are more reliable compared to a hydraulically driven machine of the same kind. Furthermore, electrically driven machines vis-à-vis hydraulically driven machines also have the advantage that there are improved possibilities regarding speed, torque and movement control.

As hydraulically driven machines are usually loud, replacing them with electrical alternatives also improves the working environment for operators in close vicinity.

In a paper bale wrapper folding machine, a paper bale enters a folding section by means of a conveyor and is placed on a turntable. The paper bale is then lifted by the turntable to a height that allows the paper bale to rotate freely above the conveyor. Once in the elevated position, wrapping paper is folded around the paper bale with the help of folding arms by rotating the paper bale using the turntable. When the wrapping paper has been folded around the paper bale, the bale is lowered and transported to a subsequent section by a subsequent conveyor.

As previously described, traditionally the turntable has been driven by hydraulics which requires high maintenance and has limited process control possibilities. As such, there is therefore a need for an improved turntable arrangement that eliminates the use of hydraulic operation and solving the above stated problems.

### Summary of invention

An object of embodiments of the present invention is to provide a turntable for lifting and rotating a paper bale, which replaces hydraulic operation of the turntable with electrical operation.

A further object of embodiments of the present invention is to provide a turntable that utilizes an electrical motor to power a lifting movement and a rotating movement of the turntable.

A further object of embodiments of the present invention is to provide an electrically driven turntable that has similar cycle times and similar dimensions as a hydraulically driven turntable.

Another object of embodiments of the present invention is to provide a paper bale wrapper folding machine comprising a turntable according to any of the previous objects.

The present invention is directed to a turntable for lifting and rotating a paper bale. The turntable comprises a turning unit comprising an upper part, a connecting section and a lower part. The upper part of the turning unit comprises a planar upper surface configured to receive a paper bale. The connecting section of the turning unit extends downwards from the upper part towards the lower part. Further, the turntable comprises an electrical motor comprising a driving shaft. Further, the turntable comprises a gear arrangement in driving engagement with the driving shaft of the electrical motor, the connecting section and/or the lower part of the turning unit. The gear arrangement is configured to convert torque from the electrical motor to a vertical movement and a rotating movement of the turning unit.

The upper surface may be planar and configured to receive a paper bale from a conveyor of a paper bale wrapper folding machine. The upper surface may further be configured to engage with the conveyor to remove the paper bale from the turning unit once lifting and rotation of the turning unit has been performed and deliver the wrapped paper bale to a subsequent section.

An exemplary effect of the turntable according to what is disclosed herein, is that the no hydraulic components are needed to lift and rotate the turning unit of the turntable. By this, a turntable requiring less maintenance is achieved. Furthermore, as an electrical motor is only active during a wrapping cycle of a paper bale, i.e. from the start of the first lifting of the turning unit to the final lowering of the turning unit, compared to a hydraulic component that is also active in between lifting cycles, an overall energy reduction is also achieved.

An exemplary effect of the turntable according to what is disclosed herein, is that since an electrical motor is smaller than a hydraulic operation system, it is possible to replace conventional turntables with the turntable according to embodiments of the present invention as the dimensions can be tailored similarly.

The vertical movement of the turning unit may be less than 100 mm, preferably approximately 70 mm. In one embodiment, the rotating movement of the turning unit is 90°. In one embodiment, the rotating movement of the turning unit is 360°.

The turntable may be configured to be operable with a paper bale wrapper folding machine.

In one exemplary turntable, the turntable further comprises a housing comprising an upper opening, and wherein the connecting section extends through the upper opening of the housing.

In one exemplary turntable, the turntable comprises one single electrical motor, and wherein the electrical motor provides the force required to perform the vertical movement and the rotating movement of the turning unit.

By such an exemplary turntable, even less maintenance compared to a conventional hydraulically driven turntable is required as only one electrical motor is required to both lift and rotate the turning unit. As only one electrical motor is required, also only one gear arrangement is needed, which further simplifies the maintenance requirements of the turntable.

According to the invention, the gear arrangement is selected from a bevel gear system comprising a camshaft, a chain drive system with separate gears for lifting and rotation, a differential gear system, or a planetary gear system.

In one exemplary turntable the lower part of the turning unit comprises a lower surface arranged at the bottom of the connecting section, wherein the lower surface is opposite to the upper surface. The lower surface may be parallel to the upper surface.

In one exemplary turntable the gear arrangement is a bevel gear system comprising at least one cam arranged on the driving shaft of the electrical motor and extending in a direction perpendicular to a longitudinal axis of the driving shaft. Further, the at least one cam comprises a bevel gear arranged on a free end thereof. An axis of the bevel gear is parallel to the driving shaft of the electrical motor. The at least one cam is arranged to rotate with the driving shaft of the electrical motor to contact the lower surface and cause a vertical movement of the turning unit. Further, the bevel gear is arranged to engage with a corresponding second circular bevel gear arranged on the lower surface to cause a rotating movement of the turning unit.

By such an exemplary turntable, the electrical motor and the gear arrangement engages with one another to both lift and rotate the turning unit.

In one exemplary turntable, the bevel gear system comprises two cams, each cam comprising a bevel gear as disclosed herein. By such an exemplary turntable, the cycle times of the turntable can be decreased as the second cam engages with the lower surface of the turning unit when the first cam has completed its lifting and rotating engagement with the lower surface. As such, it is not necessary to wait that a sole cam rotates 180° around the driving shaft of the electrical motor before engaging with the lower surface of the turning unit again.

The electrical motor may be located inside or outside the housing of the turntable.

In one exemplary turntable, the gear arrangement is a chain drive system with separate gears for vertical and rotational movement of the turning unit. The gear arrangement comprises a first sprocket gear rotatable by the driving shaft of the electrical motor. The gear arrangement further comprises a drive chain passing over the first sprocket gear. The gear arrangement further comprises a second sprocket gear arranged at a first end of a first shaft, the first shaft further comprising a first bevel gear arranged at a second end of the first shaft. The first bevel gear is configured to engage with a corresponding second bevel gear arranged on the lower part of the turning unit, wherein the engagement of the first bevel gear with the second bevel gear causes a rotating movement of the turning unit. The gear arrangement further comprises a third sprocket gear arranged at a second end of a second shaft, the second shaft further comprising a cylindrical gear arranged at a second end of the second shaft. The cylindrical gear is configured to engage with a corresponding gear rack arranged on the connecting section of the turning unit. the engagement of the cylindrical gear with the gear rack causes a vertical movement of the turning unit. Further, the gear arrangement further comprises means to shift the position of the drive chain to either engage with the second sprocket gear or the third sprocket gear.

The means to shift the position of the drive chain may be selected from any suitable mean able to shift the position from a sprocket gear to another sprocket gear, for instance by a bicycle gear type of shift arrangement. However, other types of arrangements able to shift position from a sprocket gear to another sprocket gear known to the skilled person can be utilised as well.

In one exemplary turntable, the gear arrangement is a differential gear system. The gear arrangement comprises a differential being in gear engagement with the driving shaft of the electrical motor. The differential comprises a planet carrier rotatable by the driving shaft of the electrical motor, a planet gear arranged on the planet carrier, a first sun gear and a second sun gear in driving engagement with the planet gear. Further, the first sun gear is arranged to drive a first shaft and the second sun gear is arranged to drive a second shaft. The first shaft and the second shaft are each connected to a respective brake system. Further, the first shaft comprises a first cylindrical gear arranged to engage with a corresponding fixed gear rack arranged on a fixed wall. The engagement of the first cylindrical gear with the fixed gear rack causes a vertical movement of the turning unit. Further, the second shaft comprises a first bevel gear arranged to engage with a corresponding second bevel gear arranged on a third shaft. Further, the third shaft further comprises a second cylindrical gear arranged to engage with a corresponding third cylindrical gear arranged on the connection section of the turntable. The engagement of the second cylindrical gear with the third cylindrical gear causes a rotating movement of the turning unit.

The fixed wall on which the fixed gear rack is arranged on may be a wall of the housing of the turntable.

By such an exemplary turntable, only one electrical motor is needed to both lift and rotate the turning unit. The brake system allows for controlling the rotational speed of the first shaft and second shaft, and hence allows controlling the respective movement that each shaft is responsible for. Furthermore, the use of a differential gear arrangement allows for a system comprising fewer moving parts shifting that alternate positions, thus resulting in a reduced failure risk and a more durable system.

In one exemplary turntable, the gear arrangement is a planetary gear system. The gear arrangement comprises a sun gear arranged at the end of the driving shaft of the electrical motor. Further, the gear arrangement comprises a planet carrier arranged in fixed engagement with the connecting section of the turning unit, wherein rotation of the planet carrier causes a rotational movement of the turning unit. Further, the gear arrangement further comprises planet gears arranged on the planet carrier and in driving engagement with the sun gear. Further, the gear arrangement further comprises a ring gear enclosing the planet gears, wherein the ring gear comprises gears on both the inside of the ring and outside of the ring. The inside of the ring gear is in driving engagement with the planet gears, and wherein the outside of the ring gear is in driving engagement with two cylindrical gears. Further, the cylindrical gears comprising a shaft having a ballscrew arrangement, wherein the ballscrew arrangement is in driving engagement with a threaded nut that is in fixed engagement with the connecting section of the turning unit. The rotation of the ballscrew arrangement causes vertical movement of the turning unit.

By such an exemplary turntable, a simpler, more space effective turntable is achieved as components can be closely placed inside the structure of the turntable. As such, it is possible to fit such an exemplary turntable within the same space as conventional turntables driven by hydraulics. Furthermore, such an exemplary turntable allows for easy and safe maintenance work, thus increasing the overall safety of a working environment.

As a planetary gear system enables to lock either the planet carrier or the ring gear, it is possible to control if the turning unit is to be lifted vertically or be rotated. If the planet carrier is kept locked, i.e. fixed, the ring gear drives the vertical movement and if the ring wheel is kept fixed, the planet carrier drives the rotational movement.

In one exemplary turntable, the locking of the planet carriers and the ring gear is performed using a solenoid.

In one exemplary turntable, the gear arrangement is a planetary gear system. The gear arrangement comprises a sun gear arranged at the end of the driving shaft of the electrical motor. Further, the gear arrangement comprises a planet carrier arranged in fixed engagement with the connecting section of the turning unit, wherein rotation of the planet carrier causes a rotating movement the turning unit. Further, the gear arrangement comprises planet gears arranged on the planet carrier and in driving engagement with the sun gear. Further, the gear arrangement comprises a ring gear enclosing the planet gears wherein the inside of the ring gear is in driving engagement with the planet gears. The ring gear is arranged in fixed engagement with an outer cylinder surrounding the connecting section, wherein the outer cylinder comprises an outside screw thread in engagement with a nut fixed to a fixed part. The rotation of the outer cylinder causes a vertical movement of the turning unit.

The fixed part on which the nut is fixed to may be the housing of the turntable.

By such an exemplary turntable, an even more compact and space effective turntable is achieved as components can be closely placed inside the structure of the turntable. As such, it is possible to fit such an exemplary turntable within the same space as conventional ones driven by hydraulics, or even decrease the overall volume of a turntable. Furthermore, such an exemplary turntable is even more safe when performing maintenance work as fewer rotating parts are present in the turntable.

In a second aspect, the present invention is directed to a paper bale folding machine. The paper bale folding machine comprises means for transporting a paper bale to and from a turntable. Further, the folding machine comprises a turntable according to the first aspect. Further, the folding machine comprises folding means configured to, when the paper bale is rotated by the turntable, fold and close a wrapping paper around the paper bale.

### Brief description of drawings

The invention is now described, by way of example, with reference to the accompanying drawings, in which the same reference notations denote similar items in the various figures, and in which:
Fig. 1 schematically shows a turntable in accordance with one embodiment of the present invention comprising a gear arrangement in the form of a bevel gear system.
Fig. 2 schematically shows a turntable in accordance with one embodiment of the present invention comprising a gear arrangement in the form of a chain drive system.
Fig. 3 schematically shows a turntable in accordance with one embodiment of the present invention comprising a gear arrangement in the form of a differential gear system.
Fig. 4 schematically shows a turntable in accordance with one embodiment of the present invention comprising a gear arrangement in the form of a planetary gear system.
Fig. 5 schematically shows a turntable in accordance with one embodiment of the present invention comprising a gear arrangement in the form of a planetary gear system.

### Description of embodiments

The detailed description with reference to the disclosed embodiments are to be viewed as examples of combining specific features described above. It is to be understood that additional examples may be achieved by combining other and/or fewer/more features than in the disclosed embodiments. Hence, the figures disclose exemplary embodiments and not exclusive combinations. In this context is should also be noted that, for the sake of simplicity, all figures are schematically disclosed, as long as nothing else is said.

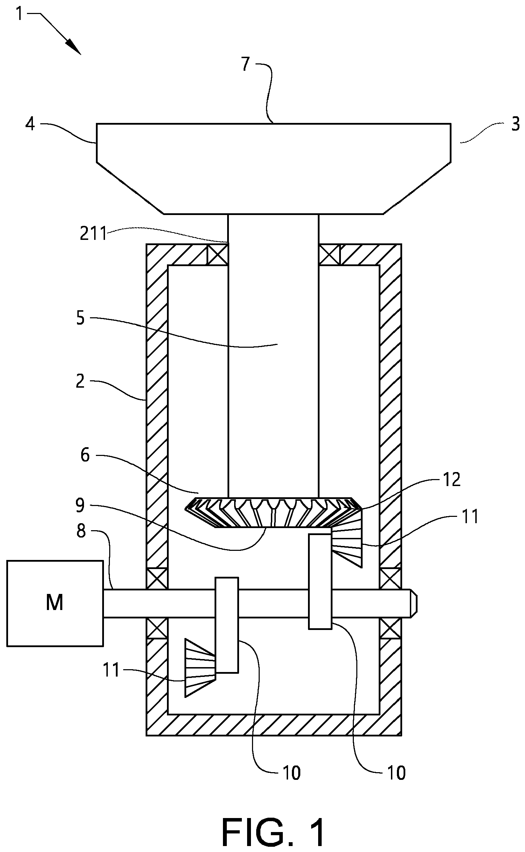

Figure 1 shows a schematic representation of a turntable 1 in accordance with one embodiment of the present invention. The turntable 1 illustrated in figure 1 comprises a housing 2 with an opening 211 at its top part. A connecting section 5 of a turning unit 3 extends through the opening 211. The turning unit 3 comprises an upper part 4, the connecting section 5 and a lower part 6. As can be seen in figure 1, the connecting section 5 extends downwards from the upper part 4 towards the lower part 6 of the turning unit 3. Furthermore, the upper part 4 comprises a planar upper surface 7 configured to receive a paper bale to be lifted and rotated.

Further present in the turntable 1 according to figure 1 is single electrical motor M comprising a driving shaft 8. The electrical motor M may be any electrical motor suitable to lift and rotate the turning unit 3.

The gear arrangement illustrated in figure 1 is a bevel gear arrangement. As previously described, the gear arrangement is configured to convert torque from the electrical motor M to a vertical movement and a rotating movement of the turning unit 3.

Arranged on the driving shaft 8 of the electrical motor M in the embodiment illustrated in figure 1, are two cams 10. The cams 10 each comprises a bevel gear 11 arranged on a free end of the bevel cams 10. As the two cams 10 are arranged on the driving shaft 8, when the driving shaft 8 rotates as a result from a torque output from the electrical motor, also the two cams 10 will rotate along with the driving shaft 8. This results in the bevel gear 11 to contact a lower surface 9 of the lower part 6, When the rotation continues, this results in a vertical, i.e. lifting, movement of the turning unit 3. At a certain point of rotation of the driving shaft 8, one of the bevel gears 11 engages with a corresponding second circular bevel gear 12 arranged on the lower surface 9. As the bevel gear 11 and the corresponding second circular bevel gear 12 engages, this causes a rotating movement of the turning unit 3.

By corresponding, is meant that the pattern of the bevel gear 11 matches the pattern of the second circular bevel gear 12, thus resulting in a driving engagement.

The two cams 10 are arranged in such a manner that when one cam 10 has completed its lifting and rotating movement of the turning unit 3, the other cam of the two cams 10 engages with the lower surface 9, and the movements are repeated.

In the embodiment illustrated in figure 1, the electrical motor M is located outside the housing 2. However, the motor can also be located inside the housing 2.

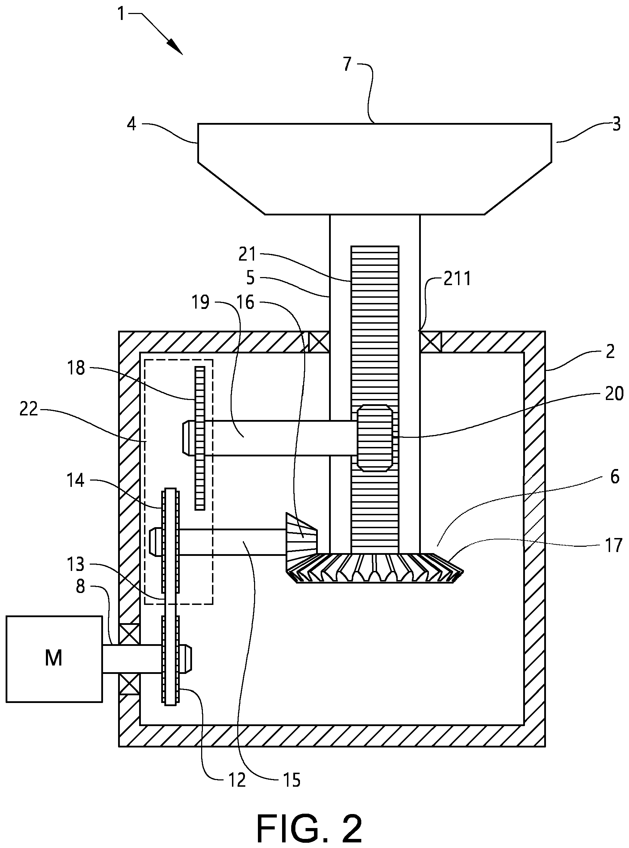

Turning now to figure 2, illustrating another turntable 1 in accordance with an embodiment of the present invention. The turntable 1 illustrated in figure 2 comprises similarly to the embodiment illustrated in figure 1, a housing 2, a single electrical motor M with a driving shaft 8, a turning unit 3 comprising an upper part 4 with a planer upper surface 7, a connecting section 5 and a lower part 6.

The turntable illustrated in figure 2 comprises a gear arrangement being a chain drive system with separate gears. As can be seen, the gear arrangement comprises a first sprocket gear 12 arranged to be rotatable by the driving shaft 8 of the electrical motor M. In figure 2, the first sprocket gear is arranged at one of the lateral ends of the driving shaft 8. Passing over the first sprocket gear 12 is a drive chain 13. The drive chain 13 can by means 22 to shift the position of the chain 13 either engage with a second sprocket gear 14 or a third sprocket gear 18.

The second sprocket gear 14 is arranged at a first end of a first shaft 15. On a second end of the first shaft 15, opposite to the first end, is a first bevel gear 16. The first bevel gear 16 is arranged to engage with a corresponding second bevel gear 17 arranged on the lower part 6 of the turning unit 3. If the chain drive 13 passes over the first sprocket gear 12 and the second sprocket gear 14, the first bevel gear 16 rotates, i.e. engages, with the second bevel gear 17, thus resulting in a rotating movement of the turning unit 3.

The third sprocket gear 18 is arranged at a first end of a second shaft 19. On a second end of the second shaft 19, opposite to the first end, is a cylindrical gear 20. The cylindrical gear 20 is arranged to engage with a corresponding gear rack 21 arranged on the connecting section 5 of the turning unit 3. If the chain drive 13 passes over the first sprocket gear 12 and the third sprocket gear 18, the cylindrical gear 20 rotates, i.e. engages, with the gear rack 21, thus resulting in a vertical movement of the turning unit 3.

The gear rack 21 is in figure 2 illustrated as a vertical stripe. However, it is to be understood that the gear rack 21 can also extend through the whole circumference of the connecting section 5.

In order to shift the position of the drive chain 13 to either pass over the second sprocket gear 14 or the third sprocket gear 18, means 22 to shift the position of the drive chain are utilized. As previously described, the means to shift the position of the drive chain may be selected from any suitable mean able to shift the position from a sprocket gear to another sprocket gear, for instance by a bicycle gear type of shift arrangement. However, other types of arrangements able to shift position from a sprocket gear to another sprocket gear known to the skilled person can be utilised as well.

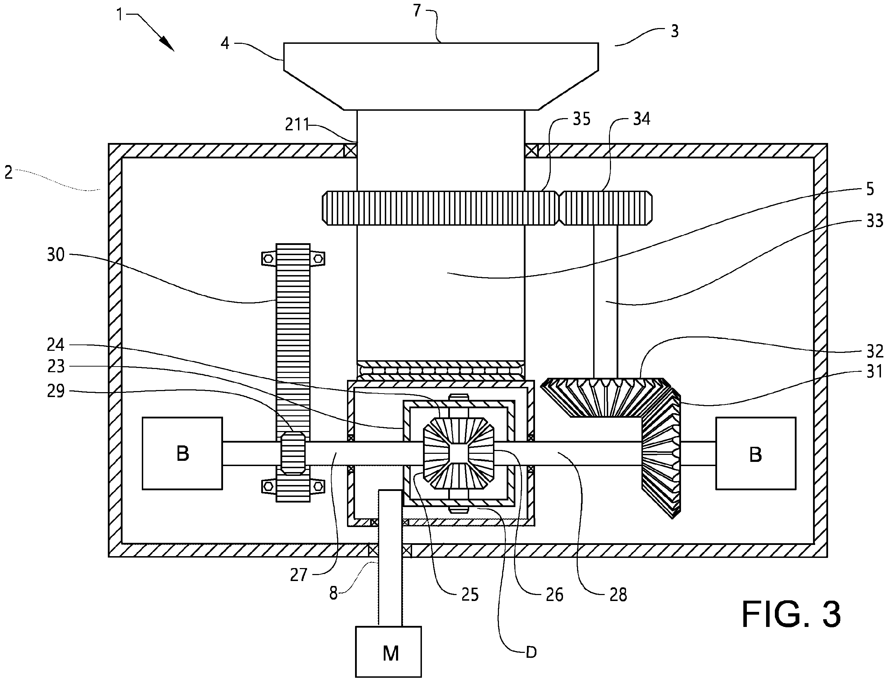

Turning now to figure 3, illustrating another turntable 1 in accordance with an embodiment of the present invention. The turntable 1 illustrated in figure 3 comprises similarly to the embodiment illustrated in figure 1, a housing 2, a single electrical motor M with a driving shaft 8, a turning unit 3 comprising an upper part 4 with a planar upper surface 7 and a connecting section 5 and a lower part (not illustrated in figure 3).

The turntable illustrated in figure 3 comprises a gear arrangement being a differential gear system. As can be seen, the gear arrangement comprises a differential D that is in gear engagement with the driving shaft 8 of the electrical motor M. The differential D comprises a planet carrier 23 that is rotatable by the driving shaft 8, a planet gear 24 arranged on the planet carrier 23, a first sun gear 25 and a second sun gear 26 in driving engagement with the planet gear 24. The first sun gear 25 is arranged to drive a first shaft 27 and the second sun gear 26 is arranged to drive a second shaft 28.

The rotation of the planet carrier 23 by the driving shaft 8 can be performed by any time of suitable arrangement know to the skilled person, such as a gear arrangement for instance.

In order to control the rotation of the first shaft 27 and the second 28, each of the first shaft 27 and the second shaft 28 are connected to a respective brake system B. As such, it is possible to rotate the two shafts at different speeds.

The first shaft 27 and its resulting engagements will now be described in more detail. The first shaft 27 comprises a first cylindrical gear 29 arranged to engage with a corresponding fixed gear rack 30 arranged on a housing 2 wall. When the first shaft 27 rotates, thus causing the first cylindrical gear 29 rotate, the cylinder gear 29 engages with the fixed gear rack 30 causing a vertical movement of the turning unit 3.

The second shaft 28 and its resulting engagements will now be described in more detail. The second shaft 28 comprises a first bevel gear 31. The first bevel gear 31 is further arranged to engage with a corresponding second bevel gear 32 arranged on a separate third shaft 33. The third shaft 33 further comprises a second cylindrical gear 34 arranged to engage with a corresponding third cylindrical gear 35 arranged on the connection section 5 of the turning unit 3. When the third shaft 33 rotates, thus causing the second cylindrical gear 34 to rotate, the second cylindrical gear 34 engages with the third cylindrical gear 35 causing a rotating movement of the turning unit 3.

In the embodiment illustrated in figure 3, the gear system comprising the differential and the turning unit 3 are arranged in such a manner that when the vertical movement of the turning unit 3 occurs as previously described, also the differential and the electrical motor M will be vertically displaced.

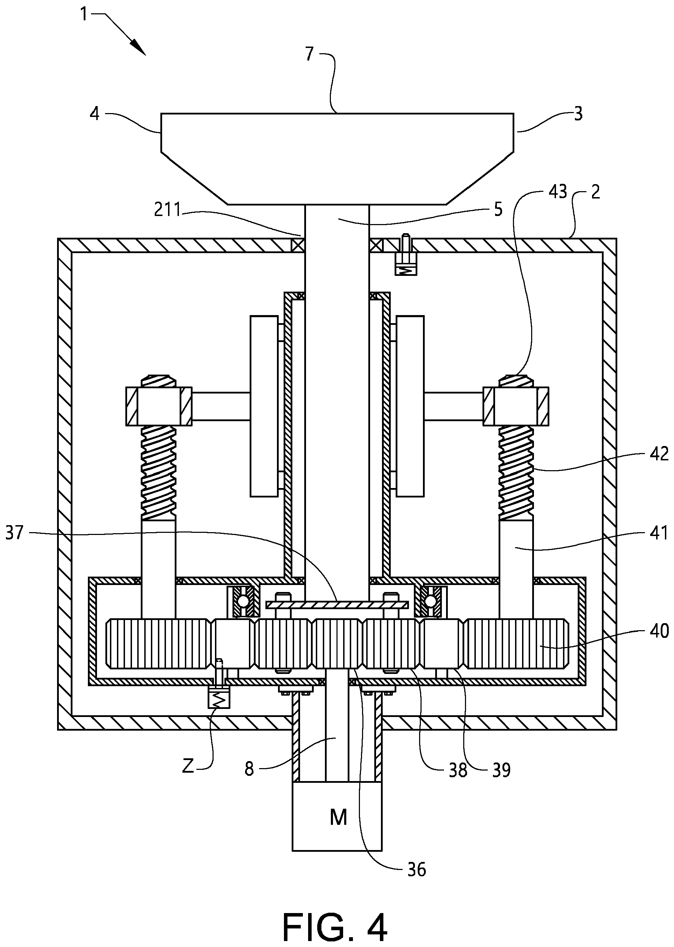

Turning now to figure 4, illustrating another turntable 1 in accordance with an embodiment of the present invention. The turntable 1 illustrated in figure 4 comprises similarly to the embodiment illustrated in figure 1, a housing 2, a single electrical motor M with a driving shaft 8, a turning unit 3 comprising an upper part 4 with a planar upper surface 7 and a connecting section 5 and a lower part (not illustrated in figure 4).

The turntable illustrated in figure 4 comprises a gear arrangement being a planetary gear system. As can be seen, the gear arrangement comprises a sun gear 36 arranged at the end of the driving shaft 8 of the electrical motor M. Thus, when the driving shaft 8 rotates, also the sun gear 36 rotates. The gear arrangement further comprises a planet carrier 37 arranged in fixed engagement with the connecting section 5 of the turning unit. As the planet carrier 37 are in fixed connection with the connecting section 5 of the turning unit, rotation of the planet carrier 37 causes a rotational movement of the turning unit 3.

The gear arrangement further comprises planet gears 38 arranged on the planet carrier 37. The planet gear 38 are in driving engagement with the sun gear 36. The planet gear 38 are enclosed by a ring gear 39. As can be seen in figure 4, the ring gear 38 comprises gears on both the inside of the ring and outside of the ring. The inside of the ring gear 39 is in driving engagement with the planet gears 38, and wherein the outside of the ring gear 39 is in driving engagement with two cylindrical gears 40.

Further, the cylindrical gears 40 illustrated in figure 4 comprises a shaft 41 having a ballscrew arrangement 42 at its second end. The ballscrew arrangement 42 is in driving engagement with a threaded nut 43 that is in fixed engagement with the connecting section 5 of the turning unit 3. When the ballscrew arrangement 42 rotates, the rotation causes a vertical movement of the turning unit 3.

In order to control the locking of either the planet carriers 37 or the ring gear 39, a solenoid Z is arranged in the gear arrangement.

In the embodiment illustrated in figure 4, the gear system comprising the planetary gear system and the turning unit 3 are arranged in such a manner that when the vertical movement of the turning unit 3 occurs as previously described, also the planetary gear system and the electrical motor M will be vertically displaced.

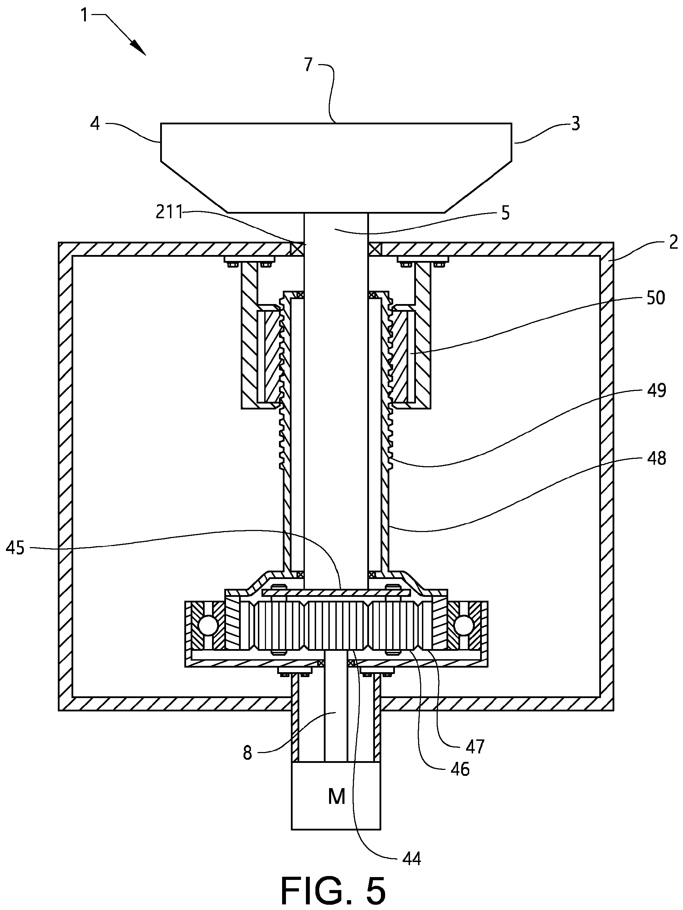

Turning now to figure 5, illustrating another turntable 1 in accordance with an embodiment of the present invention. The turntable 1 illustrated in figure 5 comprises similarly to the embodiment illustrated in figure 1, a housing 2, a single electrical motor M with a driving shaft 8, a turning unit 3 comprising an upper part 4 with a planar upper surface 7 and a connecting section 5 and a lower part (not illustrated in figure 5).

Similarly to the turntable illustrated in figure 4 , also the turntable illustrated in figure 5 comprises a gear arrangement being a planetary gear system. The gear arrangement comprises a sun gear 44 arranged at the end of the driving shaft 8 of electrical motor M. The gear arrangement further comprises a planet carrier 45 arranged in fixed engagement with the connecting section 5 of the turning unit 3. As the planet carrier 45 are in fixed connection with the connecting section 5 of the turning unit 3, rotation of the planet carrier 45 causes a rotational movement of the turning unit 3.

The gear arrangement further comprises planet gears 46 arranged on the planet carrier 45 and in driving engagement with the sun gear 4. The planet gear 46 are enclosed by a ringer gear 47. The inside of the ring gear 47 is in driving engagement with the planet gears 46.

In the embodiment illustrated in figure 5, the ring gear 47 is arranged in fixed engagement with an outer cylinder 48 surrounding the connecting section 5 of the turning unit 3. The outer cylinder 48 comprises an outside screw thread 49 in engagement with a nut 50 fixed to the housing 2 of the turntable 1. The outer cylinder 48 rotates as a result of the rotation of the ring gear 47, the rotation of the outer cylinder 48 causes a vertical movement of the turning unit 3.

Similarly to the turntable illustrated in figure 4, also the turntable illustrated in figure 5 may comprise a solenoid (not illustrated) in order to control the locking of either the planet carrier 45 or the ring gear 47.

In the embodiment illustrated in figure 5, the gear system comprising the planetary gear system and the turning unit 3 are arranged in such a manner that when the vertical movement of the turning unit 3 occurs as previously described, also the planetary gear system and the electrical motor M will be vertically displaced.

## Claims

1. A turntable (1) for lifting and rotating a paper bale, wherein the turntable (1) comprises:
a turning unit (3) comprising an upper part (4), a connecting section (5) and a lower part (6), wherein the upper part (4) comprises a planar upper surface (7) configured to receive a paper bale, and wherein the connecting section (5) extends downwards from the upper part (4) towards the lower part (6);
an electrical motor (M) comprising a driving shaft (8); and
a gear arrangement in driving engagement with the driving shaft (8) of the electrical motor, the connecting section (5) and/or the lower part (6) of the turning unit (3),
wherein the gear arrangement is configured to convert torque from the electrical motor (M) to a vertical movement and a rotating movement of the turning unit (3);
**characterized in that**
the gear arrangement is selected from a bevel gear system comprising a camshaft, a chain drive system with separate gears for lifting and rotation, a differential gear system or a planetary gear system.

2. The turntable (1) according to claim 1, wherein the turntable (1) further comprises a housing (2) comprising an upper opening (211), and wherein the connecting section (5) extends through the upper opening of the housing (2).

3. The turntable (1) according to claim 1 or 2, wherein the turntable (1) comprises one single electrical motor (M), wherein the electrical motor (M) provides the force required to perform the vertical movement and the rotating movement of the turning unit (3).

4. The turntable (1) according to any of the preceding claims, wherein the lower part (6) of the turning unit (3) comprises a lower surface (9) arranged at the bottom of the connecting section (5), wherein the lower surface (9) is opposite to the upper surface (7).

5. The turntable (1) according to claim 4, wherein the gear arrangement is a bevel gear system comprising at least one cam (10) arranged on the driving shaft (8) of the electrical motor (M) and extending in a direction perpendicular to a longitudinal axis of the driving shaft (8), wherein the at least one cam (10) comprises a bevel gear (11) arranged on a free end thereof, wherein an axis of the bevel gear (11) is parallel to the driving shaft (8), wherein the at least one cam (10) is arranged to rotate with the driving shaft (8) of the electrical motor (M) to contact the lower surface (9) and cause a vertical movement of the turning unit (3), and wherein the bevel gear (11) is arranged to engage with a corresponding second circular bevel gear (12) arranged on the lower surface (9) to cause a rotating movement of the turning unit (3).

6. The turntable (1) according to claim 1, wherein the gear arrangement is a chain drive system with separate gears for vertical and rotating movement of the turning unit (3), comprising:
a first sprocket gear (12) rotatable by the driving shaft (8) of the electrical motor (M);
a drive chain (13) passing over the first sprocket gear (12);
a second sprocket gear (14) arranged at a first end of a first shaft (15), the first shaft (15) further comprising a first bevel gear (16) arranged at a second end of the first shaft (15) and configured to engage with a corresponding second bevel gear (17) arranged on the lower part (6) of the turning unit (3), wherein the engagement of the first bevel gear (16) with the second bevel (17) gear causes a rotating movement of the turning unit (3);
a third sprocket gear (18) arranged at a second end of a second shaft (19), the second shaft (19) further comprising a cylindrical gear (20) arranged at a second end of the second shaft (19) and configured to engage with a corresponding gear rack (21) arranged on the connecting section (5) of the turning unit (3), wherein the engagement of the cylindrical gear (20) with the gear rack (21) causes a vertical movement of the turning unit (3); and
means (22) to shift the position of the drive chain (13) to either engage with the second sprocket gear (14) or the third sprocket gear (18).

7. The turntable (1) according to claims 1 and 2, wherein the gear arrangement is a differential gear system, comprising:
a differential (D) being in gear engagement with the driving shaft (8) of the electrical motor (M), the differential (D) comprising a planet carrier (23) rotatable by the driving shaft (8) of the electrical motor (M), a planet gear (24) arranged on the planet carrier (23), a first sun gear (25) and a second sun gear (26) in driving engagement with the planet gear (24), wherein the first sun gear (25) is arranged to drive a first shaft (27) and the second sun gear (26) is arranged to drive a second shaft (28);
the first shaft (27) and the second shaft (28) are each connected to a respective brake system (B);
the first shaft (27) comprises a first cylindrical gear (29) arranged to engage with a corresponding fixed gear rack (30) arranged on a fixed wall, wherein the engagement of the first cylindrical gear (29) with the fixed gear rack (30) causes a vertical movement of the turning unit (3);
the second shaft (28) comprises a first bevel gear (31) arranged to engage with a corresponding second bevel gear (32) arranged on a third shaft (33),
wherein the third shaft (33) further comprises a second cylindrical gear (34) arranged to engage with a corresponding third cylindrical gear (35) arranged on the connection section (5) of the turning unit (3), wherein the engagement of the second cylindrical gear (34) with the third cylindrical gear (35) causes a rotating movement of the turning unit (3).

8. The turntable according to claim 1, wherein the gear arrangement is a planetary gear system, comprising:
a sun gear (36) arranged at the end of the driving shaft (8) of the electrical motor (M);
a planet carrier (37) arranged in fixed engagement with the connecting section (5) of the turning unit (3), wherein rotation of the planet carrier (37) causes a rotational movement of the turning unit (3);
planet gears (38) arranged on the planet carrier (37) and in driving engagement with the sun gear (36);
a ring gear (39) enclosing the planet gears (38), wherein the ring gear (38) comprises gears on both the inside of the ring and outside of the ring, wherein the inside of the ring gear (39) is in driving engagement with the planet gears (38), and wherein the outside of the ring gear (39) is in driving engagement with two cylindrical gears (40);
the cylindrical gears (40) comprising a shaft (41) having a ballscrew arrangement (42), wherein the ballscrew arrangement (42) is in driving engagement with a threaded nut (43) that is in fixed engagement with the connecting section (5) of the turning unit (3), wherein rotation of the ballscrew arrangement causes vertical movement of the turning unit.

9. The turntable according to claim 8, wherein the locking of the planet carrier and the ring gear is performed using a solenoid (Z).

10. The turntable according to claims 1 and 2, wherein the gear arrangement is a planetary gear system, comprising:
a sun gear (44) arranged at the end of the driving shaft (8) of the electrical motor (M);
a planet carrier (45) arranged in fixed engagement with the connecting section (5) of the turning unit (3), wherein rotation of the planet carrier (45) causes a rotating movement the turning unit (3);
planet gears (46) arranged on the planet carrier (45) and in driving engagement with the sun gear (44);
a ring gear (47) enclosing the planet gears wherein the inside of the ring gear is in driving engagement with the planet gears, wherein the ring gear (47) is arranged in fixed engagement with an outer cylinder (48) surrounding the connecting section (5) of the turning unit (3), wherein the outer cylinder (48) comprises an outside screw thread (49) in engagement with a nut (50) fixed to a fixed part, wherein rotation of the outer cylinder (48) causes a vertical movement of the turning unit (3).

11. A paper bale wrapper folding machine, comprising:
- means for transporting a paper bale to and from a turntable;
- a turntable according to any one of claims 1 - 10; and
- folding means configured to, when the paper bale is rotated by the turntable, fold and close a wrapping paper around the paper bale.

## Patentansprüche

1. Drehtisch (1) zum Heben und Drehen eines Papierballens, wobei der Drehtisch (1) umfasst:
eine Dreheinheit (3), umfassend ein Oberteil (4), einen Verbindungsabschnitt (5) und ein Unterteil (6), wobei das Oberteil (4) eine ebene Oberseite (7) umfasst, die ausgelegt ist, einen Papierballen aufzunehmen, und wobei sich der Verbindungsabschnitt (5) von dem Oberteil (4) nach unten zu dem Unterteil (6) erstreckt;
einen Elektromotor (M), umfassend eine Antriebswelle (8); und
eine Getriebeanordnung in Antriebseingriff mit der Antriebswelle (8) des Elektromotors, dem Verbindungsabschnitt (5) und/oder dem Unterteil (6) der Dreheinheit (3),
wobei die Getriebeanordnung ausgelegt ist, Drehmoment von dem Elektromotor (M) in eine Vertikalbewegung und eine Drehbewegung der Dreheinheit (3) umzuwandeln;
**dadurch gekennzeichnet, dass** die Getriebeanordnung ausgewählt ist aus einem Kegelradsystem, umfassend eine Nockenwelle, einem Kettenantriebssystem mit separaten Zahnrädern zum Heben und Drehen, einem Differentialgetriebesystem oder einem Planetengetriebesystem.

2. Drehtisch (1) nach Anspruch 1, wobei der Drehtisch (1) ferner ein Gehäuse (2) umfasst, das eine obere Öffnung (211) umfasst, und wobei sich der Verbindungsabschnitt (5) durch die obere Öffnung des Gehäuses (2) erstreckt.

3. Drehtisch (1) nach Anspruch 1 oder 2, wobei der Drehtisch (1) einen einzigen Elektromotor (M) umfasst, wobei der Elektromotor (M) die zum Durchführen der Vertikalbewegung und der Drehbewegung der Dreheinheit (3) erforderliche Kraft bereitstellt.

4. Drehtisch (1) nach einem der vorhergehenden Ansprüche, wobei das Unterteil (6) der Dreheinheit (3) eine Unterseite (9) umfasst, die am unteren Ende des Verbindungsabschnitts (5) angeordnet ist, wobei die Unterseite (9) der Oberseite (7) gegenüberliegt.

5. Drehtisch (1) nach Anspruch 4, wobei die Getriebeanordnung ein Kegelradsystem ist, umfassend mindestens einen Nocken (10), der auf der Antriebswelle (8) des Elektromotors (M) angeordnet ist und sich in einer Richtung senkrecht zu einer Längsachse der Antriebswelle (8) erstreckt, wobei der mindestens eine Nocken (10) ein Kegelrad (11) umfasst, das an einem freien Ende desselben angeordnet ist, wobei eine Achse des Kegelrads (11) parallel zu der Antriebswelle (8) ist, wobei der mindestens eine Nocken (10) angeordnet ist, um sich mit der Antriebswelle (8) des Elektromotors (M) zu drehen, um die Unterseite (9) zu kontaktieren und eine Vertikalbewegung der Dreheinheit (3) zu verursachen, und wobei das Kegelrad (11) angeordnet ist, um mit einem entsprechenden zweiten kreisförmigen Kegelrad (12) in Eingriff zu gelangen, das auf der Unterseite (9) angeordnet ist, um eine Drehbewegung der Dreheinheit (3) zu verursachen.

6. Drehtisch (1) nach Anspruch 1, wobei die Getriebeanordnung ein Kettenantriebssystem mit separaten Zahnrädern für die Vertikalbewegung und die Drehbewegung der Dreheinheit (3) ist, umfassend:
ein erstes Kettenrad (12), das durch die Antriebswelle (8) des Elektromotors (M) drehbar ist;
eine Antriebskette (13), die über das erste Kettenrad (12) läuft;
ein zweites Kettenrad (14), das an einem ersten Ende einer ersten Welle (15) angeordnet ist, wobei die erste Welle (15) ferner ein erstes Kegelrad (16) umfasst, das an einem zweiten Ende der ersten Welle (15) angeordnet und ausgelegt ist, mit einem entsprechenden zweiten Kegelrad (17) in Eingriff zu gelangen, das an dem Unterteil (6) der Dreheinheit (3) angeordnet ist, wobei der Eingriff des ersten Kegelrads (16) mit dem zweiten Kegelrad (17) eine Drehbewegung der Dreheinheit (3) verursacht;
ein drittes Kettenrad (18), das an einem zweiten Ende einer zweiten Welle (19) angeordnet ist, wobei die zweite Welle (19) ferner ein Zylinderrad (20) umfasst, das an einem zweiten Ende der zweiten Welle (19) angeordnet und ausgelegt ist, mit einer entsprechenden Zahnstange (21) in Eingriff zu gelangen, die an dem Verbindungsabschnitt (5) der Dreheinheit (3) angeordnet ist, wobei der Eingriff des Zylinderrads (20) mit der Zahnstange (21) eine Vertikalbewegung der Dreheinheit (3) verursacht; und
Mittel (22) zum Verschieben der Position der Antriebskette (13), um entweder mit dem zweiten Kettenrad (14) oder dem dritten Kettenrad (18) in Eingriff zu gelangen.

7. Drehtisch (1) nach den Ansprüchen 1 und 2, wobei die Getriebeanordnung ein Differentialgetriebesystem ist, umfassend:
ein Differentialgetriebe (D) in Zahneingriff mit der Antriebswelle (8) des Elektromotors (M), wobei das Differentialgetriebe (D) einen Planetenträger (23), der durch die Antriebswelle (8) des Elektromotors (M) drehbar ist, ein Planetenrad (24), das auf dem Planetenträger (23) angeordnet ist, ein erstes Sonnenrad (25) und ein zweites Sonnenrad (26) in Antriebseingriff mit dem Planetenrad (24) umfasst, wobei das erste Sonnenrad (25) angeordnet ist, eine erste Welle (27) anzutreiben, und das zweite Sonnenrad (26) angeordnet ist, eine zweite Welle (28) anzutreiben;
die erste Welle (27) und die zweite Welle (28) jeweils mit einem jeweiligen Bremssystem (B) verbunden sind;
die erste Welle (27) ein erstes Zylinderrad (29) umfasst, das angeordnet ist, um mit einer entsprechenden feststehenden Zahnstange (30) in Eingriff zu gelangen, die an einer feststehenden Wand angeordnet ist, wobei der Eingriff des ersten Zylinderrads (29) mit der feststehenden Zahnstange (30) eine Vertikalbewegung der Dreheinheit (3) verursacht;
die zweite Welle (28) ein erstes Kegelrad (31) umfasst, das angeordnet ist, um mit einem entsprechenden zweiten Kegelrad (32) in Eingriff zu gelangen, das auf einer dritten Welle (33) angeordnet ist,
wobei die dritte Welle (33) ferner ein zweites Zylinderrad (34) umfasst, das angeordnet ist, um mit einem entsprechenden dritten Zylinderrad (35) in Eingriff zu gelangen, das an dem Verbindungsabschnitt (5) der Dreheinheit (3) angeordnet ist, wobei der Eingriff des zweiten Zylinderrads (34) mit dem dritten Zylinderrad (35) eine Drehbewegung der Dreheinheit (3) verursacht.

8. Drehtisch nach Anspruch 1, wobei die Getriebeanordnung ein Planetengetriebesystem ist, umfassend:
ein Sonnenrad (36), das am Ende der Antriebswelle (8) des Elektromotors (M) angeordnet ist;
einen Planetenträger (37), der in festem Eingriff mit dem Verbindungsabschnitt (5) der Dreheinheit (3) angeordnet ist, wobei eine Drehung des Planetenträgers (37) eine Rotationsbewegung der Dreheinheit (3) verursacht;
Planetenräder (38), die auf dem Planetenträger (37) und in Antriebseingriff mit dem Sonnenrad (36) angeordnet sind;
ein Hohlrad (39), das die Planetenräder (38) umschließt, wobei das Hohlrad (38) Zahnräder sowohl auf der Innenseite des Ringes als auch auf der Außenseite des Ringes umfasst, wobei die Innenseite des Hohlrads (39) in Antriebseingriff mit den Planetenrädern (38) ist, und wobei die Außenseite des Hohlrads (39) in Antriebseingriff mit zwei Zylinderrädern (40) ist;
wobei die Zylinderräder (40) eine Welle (41) umfassen, die eine Kugelgewindespindelanordnung (42) aufweist, wobei die Kugelgewindespindelanordnung (42) in Antriebseingriff mit einer Gewindemutter (43) ist, die in festem Eingriff mit dem Verbindungsabschnitt (5) der Dreheinheit (3) ist, wobei eine Drehung der Kugelgewindespindelanordnung eine Vertikalbewegung der Dreheinheit verursacht.

9. Drehtisch nach Anspruch 8, wobei das Verriegeln des Planetenträgers und des Hohlrads unter Verwendung eines Elektromagneten (Z) durchgeführt wird.

10. Drehtisch nach den Ansprüchen 1 und 2, wobei die Getriebeanordnung ein Planetengetriebesystem ist, umfassend:
ein Sonnenrad (44), das am Ende der Antriebswelle (8) des Elektromotors (M) angeordnet ist;
einen Planetenträger (45), der in festem Eingriff mit dem Verbindungsabschnitt (5) der Dreheinheit (3) angeordnet ist, wobei eine Drehung des Planetenträgers (45) eine Drehbewegung der Dreheinheit (3) verursacht;
Planetenräder (46), die auf dem Planetenträger (45) und in Antriebseingriff mit dem Sonnenrad (44) angeordnet sind;
ein Hohlrad (47), das die Planetenräder umschließt, wobei die Innenseite des Hohlrads in Antriebseingriff mit den Planetenrädern ist, wobei das Hohlrad (47) in festem Eingriff mit einem Außenzylinder (48) angeordnet ist, der den Verbindungsabschnitt (5) der Dreheinheit (3) umgibt, wobei der Außenzylinder (48) ein Außengewinde (49) in Eingriff mit einer Mutter (50) umfasst, die an einem feststehenden Teil befestigt ist, wobei eine Drehung des Außenzylinders (48) eine Vertikalbewegung der Dreheinheit (3) verursacht.

11. Faltmaschine für Papierballenverpackungen, umfassend:
- Mittel zum Transportieren eines Papierballens zu und von einem Drehtisch;
- einen Drehtisch nach einem der Ansprüche 1 - 10; und
- Faltmittel, die ausgelegt sind, wenn der Papierballen durch den Drehtisch gedreht wird, ein Packpapier um den Papierballen zu falten und zu verschließen.

## Revendications

1. Plateau tournant (1) pour soulever et entraîner en rotation une balle de papier, dans lequel le plateau tournant (1) comprend :
une unité de retournement (3) comprenant une partie supérieure (4), une section de liaison (5) et une partie inférieure (6), dans lequel la partie supérieure (4) comprend une surface supérieure plane (7) configurée pour recevoir une balle de papier, et dans lequel la section de liaison (5) s'étend vers le bas de la partie supérieure (4) vers la partie inférieure (6) ;
un moteur électrique (M) comprenant un arbre d'entraînement (8) ; et
un agencement d'engrenages en prise d'entraînement avec l'arbre d'entraînement (8) du moteur électrique, la section de liaison (5) et/ou la partie inférieure (6) de l'unité de retournement (3),
dans lequel l'agencement d'engrenages est configuré pour convertir un couple du moteur électrique (M) en un mouvement vertical et un mouvement de rotation de l'unité de retournement (3) ;
**caractérisé en ce que** l'agencement d'engrenages est choisi parmi un système d'engrenages coniques comprenant un arbre à cames, un système d'entraînement par chaîne avec des engrenages séparés pour le levage et la rotation, un système d'engrenages différentiels ou un système d'engrenages planétaires.

2. Plateau tournant (1) selon la revendication 1, dans lequel le plateau tournant (1) comprend en outre un logement (2) comportant une ouverture supérieure (211), et dans lequel la section de liaison (5) s'étend à travers l'ouverture supérieure du logement (2).

3. Plateau tournant (1) selon la revendication 1 ou 2, dans lequel le plateau tournant (1) comprend un seul moteur électrique (M), dans lequel le moteur électrique (M) fournit la force nécessaire pour réaliser le mouvement vertical et le mouvement de rotation de l'unité de retournement (3).

4. Plateau tournant (1) selon l'une quelconque des revendications précédentes, dans lequel la partie inférieure (6) de l'unité de retournement (3) comprend une surface inférieure (9) agencée au niveau du fond de la section de liaison (5), dans lequel la surface inférieure (9) est opposée à la surface supérieure (7).

5. Plateau tournant (1) selon la revendication 4, dans lequel l'agencement d'engrenages est un système d'engrenages coniques comprenant au moins une came (10) agencée sur l'arbre d'entraînement (8) du moteur électrique (M) et s'étendant dans une direction perpendiculaire à un axe longitudinal de l'arbre d'entraînement (8), dans lequel l'au moins une came (10) comprend un engrenage conique (11) agencé sur une extrémité libre de celle-ci, dans lequel un axe de l'engrenage conique (11) est parallèle à l'arbre d'entraînement (8), dans lequel l'au moins une came (10) est agencée pour entrer en rotation avec l'arbre d'entraînement (8) du moteur électrique (M) afin d'entrer en contact avec la surface inférieure (9) et de provoquer un mouvement vertical de l'unité de retournement (3), et dans lequel l'engrenage conique (11) est agencé pour venir en prise avec un second engrenage conique (12) circulaire correspondant agencé sur la surface inférieure (9) afin de provoquer un mouvement de rotation de l'unité de retournement (3).

6. Plateau tournant (1) selon la revendication 1, dans lequel l'agencement d'engrenages est un système d'entraînement par chaîne avec des engrenages séparés pour le mouvement vertical et de rotation de l'unité de retournement (3), comprenant :
un premier pignon (12) pouvant être entraîné en rotation par l'arbre d'entraînement (8) du moteur électrique (M) ;
une chaîne d'entraînement (13) passant sur le premier pignon (12) ;
un deuxième pignon (14) agencé au niveau d'une première extrémité d'un premier arbre (15), le premier arbre (15) comprenant en outre un premier engrenage conique (16) agencé au niveau d'une seconde extrémité du premier arbre (15) et configuré pour venir en prise avec un deuxième engrenage conique (17) correspondant agencé sur la partie inférieure (6) de l'unité de retournement (3), dans lequel la mise en prise du premier engrenage conique (16) avec le deuxième engrenage conique (17) provoque un mouvement de rotation de l'unité de retournement (3) ;
un troisième pignon (18) agencé au niveau d'une seconde extrémité d'un deuxième arbre (19), le deuxième arbre (19) comprenant en outre un engrenage cylindrique (20) agencé au niveau d'une seconde extrémité du deuxième arbre (19) et configuré pour venir en prise avec une crémaillère (21) correspondante agencée sur la section de liaison (5) de l'unité de retournement (3), dans lequel la mise en prise de l'engrenage cylindrique (20) avec la crémaillère (21) provoque un mouvement vertical de l'unité de retournement (3) ; et
des moyens (22) pour décaler la position de la chaîne d'entraînement (13) pour qu'elle vienne en prise soit avec le deuxième pignon (14), soit avec le troisième pignon (18).

7. Plateau tournant (1) selon les revendications 1 et 2, dans lequel l'agencement d'engrenages est un système d'engrenages différentiels, comprenant :
un différentiel (D) étant en prise d'engrenage avec l'arbre d'entraînement (8) du moteur électrique (M), le différentiel (D) comprenant un porte-satellites (23) pouvant être entraîné en rotation par l'arbre d'entraînement (8) du moteur électrique (M), un engrenage planétaire (24) agencé sur le porte-satellites (23), un premier engrenage solaire (25) et un second engrenage solaire (26) en prise d'entraînement avec l'engrenage planétaire (24), dans lequel le premier engrenage solaire (25) est agencé pour entraîner un premier arbre (27) et le second engrenage solaire (26) est agencé pour entraîner un deuxième arbre (28) ;
le premier arbre (27) et le deuxième arbre (28) sont chacun reliés à un système de freinage (B) respectif ;
le premier arbre (27) comprend un premier engrenage cylindrique (29) agencé pour venir en prise avec une crémaillère fixe (30) correspondante agencée sur une paroi fixe, dans lequel la mise en prise du premier engrenage cylindrique (29) avec la crémaillère fixe (30) provoque un mouvement vertical de l'unité de retournement (3) ;
le deuxième arbre (28) comprend un premier engrenage conique (31) agencé pour venir en prise avec un deuxième engrenage conique (32) correspondant agencé sur un troisième arbre (33),
dans lequel le troisième arbre (33) comprend en outre un deuxième engrenage cylindrique (34) agencé pour venir en prise avec un troisième engrenage cylindrique (35) correspondant agencé sur la section de liaison (5) de l'unité de retournement (3), dans lequel la mise en prise du deuxième engrenage cylindrique (34) avec le troisième engrenage cylindrique (35) provoque un mouvement de rotation de l'unité de retournement (3).

8. Plateau tournant selon la revendication 1, dans lequel l'agencement d'engrenages est un système d'engrenages planétaires, comprenant :
un engrenage solaire (36) agencé au niveau de l'extrémité de l'arbre d'entraînement (8) du moteur électrique (M) ;
un porte-satellites (37) agencé en prise fixe avec la section de liaison (5) de l'unité de retournement (3), dans lequel une rotation du porte-satellites (37) provoque un mouvement de rotation de l'unité de retournement (3) ;
des engrenages planétaires (38) agencés sur le porte-satellites (37) et en prise d'entraînement avec l'engrenage solaire (36) ;
une couronne dentée (39) enfermant les engrenages planétaires (38), dans lequel la couronne dentée (38) comprend des engrenages à la fois à l'intérieur de la couronne et à l'extérieur de la couronne, dans lequel l'intérieur de la couronne dentée (39) est en prise d'entraînement avec les engrenages planétaires (38), et dans lequel l'extérieur de la couronne dentée (39) est en prise d'entraînement avec deux engrenages cylindriques (40) ;
les engrenages cylindriques (40) comprenant un arbre (41) ayant un agencement à vis à billes (42), dans lequel l'agencement à vis à billes (42) est en prise d'entraînement avec un écrou fileté (43) qui est en prise fixe avec la section de liaison (5) de l'unité de retournement (3), dans lequel une rotation de l'agencement à vis à billes provoque un mouvement vertical de l'unité de retournement.

9. Plateau tournant selon la revendication 8, dans lequel le verrouillage du porte-satellites et de la couronne dentée est réalisé à l'aide d'un solénoïde (Z).

10. Plateau tournant selon les revendications 1 et 2, dans lequel l'agencement d'engrenages est un système d'engrenages planétaires, comprenant :
un engrenage solaire (44) agencé au niveau de l'extrémité de l'arbre d'entraînement (8) du moteur électrique (M) ;
un porte-satellites (45) agencé en prise fixe avec la section de liaison (5) de l'unité de retournement (3), dans lequel une rotation du porte-satellites (45) provoque un mouvement de rotation de l'unité de retournement (3) ;
des engrenages planétaires (46) agencés sur le porte-satellites (45) et en prise d'entraînement avec l'engrenage solaire (44) ;
une couronne dentée (47) enfermant les engrenages planétaires, dans lequel l'intérieur de la couronne dentée est en prise d'entraînement avec les engrenages planétaires, dans lequel la couronne dentée (47) est agencée en prise fixe avec un cylindre externe (48) entourant la section de liaison (5) de l'unité de retournement (3), dans lequel le cylindre externe (48) comprend un filetage extérieur (49) en prise avec un écrou (50) fixé à une partie fixe, dans lequel une rotation du cylindre externe (48) provoque un mouvement vertical de l'unité de retournement (3).

11. Machine de pliage enrubanneuse de balles de papier, comprenant :
- des moyens de transport d'une balle de papier vers et depuis un plateau tournant ;
- un plateau tournant selon l'une quelconque des revendications 1 à 10 ; et
- des moyens de pliage configurés pour, lorsque la balle de palier est entraînée en rotation par le plateau tournant, plier et fermer un papier d'emballage autour de la balle de papier.
